# EUROPEAN PATENT SPECIFICATION

(11) **EP 0 526 232 B1**
(45) Date of publication and mention of the grant of the patent: **17.12.1997**
(21) Application number: 92306999.1
(22) Date of filing: 31.07.1992
(51) Int. Cl.: G02F 1/1333, G02F 1/1339

(54) **A method of manufacturing and storing a liquid crystal display element**
Verfahren zur Herstellung und Lagerung von einem Flüssigkristall-Anzeigeelement
Procédé de fabrication et de stockage d'un dispositif d'affichage à cristal liquide

(30) Priority: 01.08.1991 JP 192972/91; 01.08.1991 JP 192973/91; 29.06.1992 JP 170335/92; 29.06.1992 JP 170336/92; 29.06.1992 JP 170337/92; 29.06.1992 JP 170338/92; 01.07.1992 JP 174140/92
(43) Date of publication of application: 03.02.1993
(73) Proprietor: SEIKO EPSON CORPORATION, Shinjuku-ku Tokyo-to (JP)
(72) Inventor: Hinata, Shoji, Suwa-shi, Nagano-ken (JP); Ono, Yoichi, Suwa-shi, Nagano-ken (JP); Tsukahara, Akira, Suwa-shi, Nagano-ken (JP)
(74) Representative: Sturt, Clifford Mark

(56) References cited:
- EP-A- 0 327 071
- US-A- 4 315 668
- US-A- 4 709 991
- PATENT ABSTRACTS OF JAPAN vol. 7, no. 30 (P-173) 5 February 1983; & JP-A-57 182 721

## Description

The present invention relates to methods of manufacturing and storing liquid crystal display elements including flexible substrates.

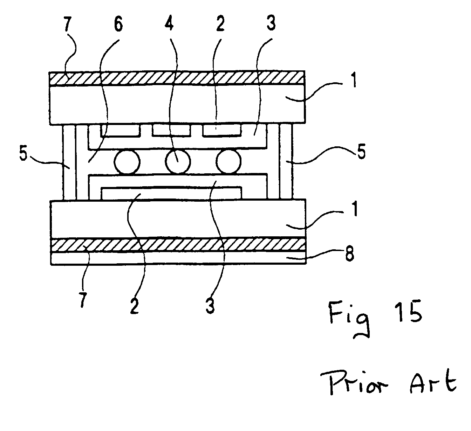

As shown in Fig. 15, a liquid crystal display element typically comprises a pair of substrates (1) sandwiching between a liquid crystal medium (6). Orientating films (3) are disposed on the substrates for orientating liquid crystal molecules to provide the requisite display. Hitherto, the substrates have comprised glass but increasingly flexible substrates such as plastic films have been used and the flexible substrates have merely replaced the glass substrates during manufacture.

When manufacturing liquid crystal display elements with glass substrates, the glass substrate is relatively impervious and so there was no need to subject the substrates to any gas barrier treatment. The liquid crystals of the liquid crystal medium were not been monitored so as to control the solubility and degree of saturation of gas in the liquid crystal medium. The elements were stored at normal pressures and temperatures. Finally, when mounting such elements in electronic equipment, the elements were exposed so that external pressure could be applied directly to the elements.

However, when flexible substrates are used, problems have arisen with such elements. One change due to including flexible substrates was made and that was providing spacers (4), at least 100 to 150 spacers per mm² for initially determining the thickness of the element.

One example of such a prior art flexible substrate liquid crystal display element is shown in European Patent Publication No. 0327071, which describes a liquid crystal display element employing flexible substrates and having spacers to determine the thickness of the element. Spacer numbers of 120 per mm² are suggested.

Further problems arose because the flexible substrates such as plastic films have permeability to gas or water vapour. Consequently, when the element is stored or used at ambient conditions (i.e. normal pressure or temperature, usually 25°C at 1 atm) gas or water vapour permeates the flexible substrate and thus enters the liquid crystal medium. Eventually, the gas or water vapour may become saturated in the liquid crystal medium. Thus due to the inherent nature of the flexible substrates that they are likely to become deformed by an external force such as being pressed by a finger or dropped, bubbles may form inside the liquid crystal display element and thereby diminishing the quality of the display.

An object of the present invention is therefore to provide a liquid crystal display element including at least one flexible substrate which substantially obviates the aforementioned problem. A further object of the present invention is to provide a method of manufacturing and storing such a liquid crystal display element and to provide electronic equipment on which the same is mounted for minimising the possibility of bubbles forming in the liquid crystal display element.

According to the present invention there is provided a method of producing a liquid crystal display element comprising the steps of forming an orientating film on each of a pair of flexible substrates; forming an electrode layer on one of the substrates on the same side as the respective orientating film, arranging a plurality of spacers between the two substrates to define predetermined space therebetween; sealing the flexible substrates to each other by sealing members; sealing liquid crystal material in the space and providing a gas barrier around the liquid crystal material, characterised by placing the substrates and sealed in liquid crystal material under reduced pressure.

The liquid crystal of the above liquid crystal display is employed which has oxygen saturation solubility of not less than 10 µl/ml, a liquid crystal having nitrogen saturation solubility of not less than 10 µl/ml or a liquid crystal having saturation solubility of water vapour of not less than 100 ppm, and the degree to which either oxygen, nitrogen or water vapour, or a mixture thereof, is saturated in the liquid crystal immediately after the production of the above liquid crystal display element, is not more than 0.9.

The number of said spacers ranges from 150 to 300 per mm², and hard coat layers having a pencil hardness of not less than "H" are formed between inner surfaces of said film substrates and said orientating films.

The above liquid crystal display element is produced by allowing it to stand at reduced pressure.

The above-described liquid crystal display element is stored at reduced pressure.

The structure of electronic equipment on which a liquid crystal display element is mounted is such that a guard plate having a thickness of not less than 0.5 mm is disposed over the above liquid crystal display element.

In the above structure, the above liquid crystal display element and above guard plate are disposed with a space of not less than 0.5 mm.

Embodiments of the present invention will now be described with reference to the accompanying drawings of which:
Fig. 1 is a cross section of a liquid crystal display element according to the first embodiment of the present invention;
Fig. 2 is a cross section of a liquid crystal display element according to the second embodiment of the present invention;
Fig. 3 is a cross section of a liquid crystal display element according to the third embodiment of the present invention;
Fig. 4 is a cross section of a liquid crystal display element according to the fourth embodiment of the present invention;
Fig. 5 is a cross section of a liquid crystal display element showing the fifth embodiment of the present invention;
Fig. 6 is a graph illustrating the amount of time required for a bubble nucleus to disappear in accordance with a pressure test against the amount of time the display element has been allowed to stand;
Fig. 7 is a cross section illustrating vacuum packing in the fifteenth embodiment of the present invention;
Fig. 8 is a cross section illustrating several liquid crystal display elements being vacuumed packed according to the sixteenth embodiment of the present invention;
Fig. 9 is an enlarged cross section illustrating part of the structure of a piece of electronic equipment by which a liquid crystal display element has been mounted;
Fig. 10 is an enlarged cross section of a gas barrier film according to the first embodiment of the present invention;
Fig. 11 is an enlarged cross section of a gas barrier film according to the sixth embodiment of the present invention;
Fig. 12 is a cross section of a pressure test tool illustrating a pressure test applied to a typical liquid crystal display element;
Fig. 13 is a cross section illustrating the nucleus of a bubble;
Fig. 14 is a cross section illustrating a bubble; and
Fig. 15 is a cross section of a conventional liquid display element.

### Embodiment No. 1

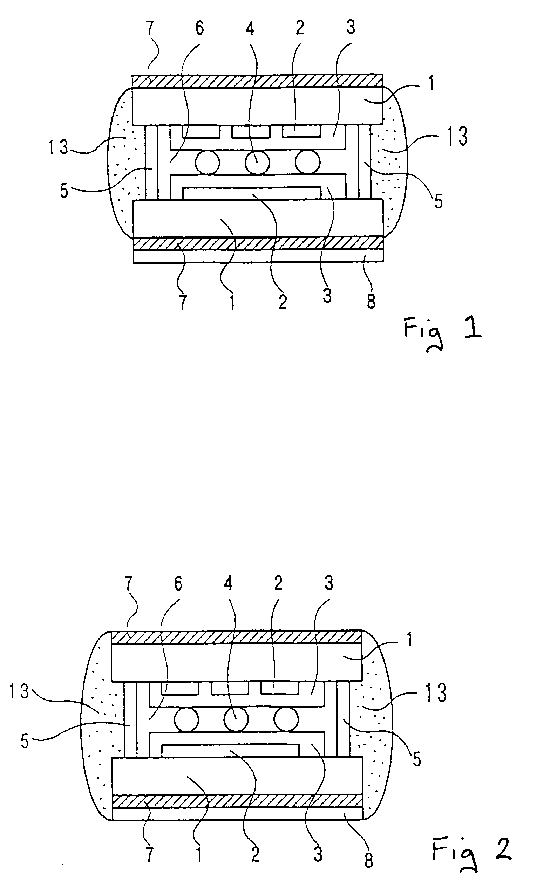

With reference to Fig. 1, a liquid crystal display element is shown and comprises upper and lower substrates both utilising a gas barrier film. The element further comprises transparent electrodes 2 made of an ITO (Indium-tin oxide) film, an orientating film 3, a plurality of spacers 4, seal members 5 and a liquid crystal medium 6. A pair of polarising plates 7 are disposed on either side of the substrates with a reflecting plate 8 mounted on one of the polarising plates.

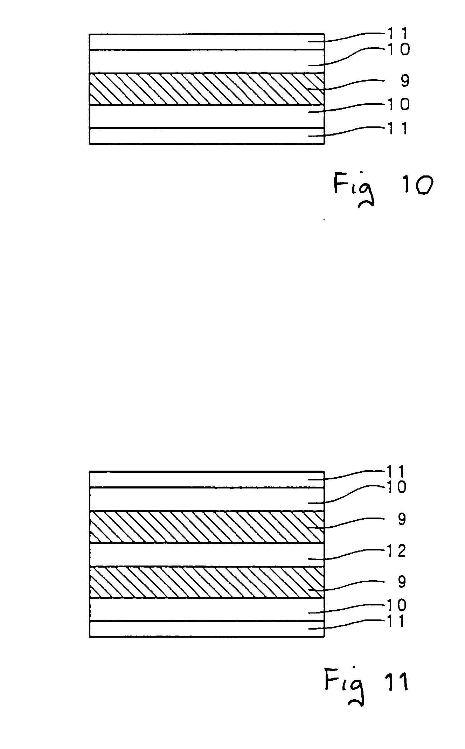

As the substrates 1 are flexible, the present invention includes means for applying a gas barrier treatment so as to reduce the gas permeability of the flexible substrates 1. The internal construction of one of the substrates 1 is shown in Fig. 10. With reference to Fig. 10, a film 9 typically a polycarbonate film is used as a supporting substrate. A gas barrier layer 10 is applied to both sides of the film 9. The gas barrier layer may comprise EVA (ethylene-vinyl acetate copolymer) or PVA (polyvinyl alcohol). The coating layer 11 sandwiches both the gas barrier 10 and substrate 9 therebetween. Typically, the coating layer comprises phenoxy resin and provides a pencil hardness of not less than H (H being a recognised hardness according to the Japanese Industrial Standards, JIS K5400 item 6.14). Please refer to Appendix A attached hereto for a definition of this term.

The method of manufacturing the liquid crystal display element according to the first embodiment of the present invention is as follows. The transparent electrodes 2 are applied to the substrate 1 including the gas barrier film by a low temperature sputtering process. A predetermined pattern is then formed by a photolithographic process. The orientation film 3 is then attached and cured to the electrode pattern by offset printing. The orientation film is then rubbed with a cloth in the predetermined direction to instil the predetermined alignment. The seal members 5 are then printed on one substrate by a screen process printing. The seal members comprise an epoxy system adhesive containing gap materials mixed therein. Spacers 4 are then sprayed on the substrate using a wet spray process. The two substrates are then bonded together so as to face each other. The number of spacers sprayed is 150 per mm². Using a vacuum injecting process, liquid crystal 6 is injected into the space between the substrates. The portion where liquid crystal is injected, is then sealed by the epoxy system adhesive.

The liquid crystal display element then undergoes further gas barrier treatment by the application of epoxy system adhesive 13 to both ends of the substrate which is then hardened. After polarising plates 7 are fixed to the upper and lower sides of the cell and the reflecting plate 8 mounted, the liquid crystal display element is finished. Such a liquid crystal display element utilizing a gas barrier means reduces the permeation of gas or water vapour into the liquid crystal by applying such to the end portions of the substrates or being welded by heat or the like.

For the purposes of this description, tests done on elements of the present invention were also conducted on a prior art liquid crystal display element as a comparison. In the prior art comparison, the element was comprised as above but without epoxy system adhesive being applied to the end portions of the substrate and then being hardened.

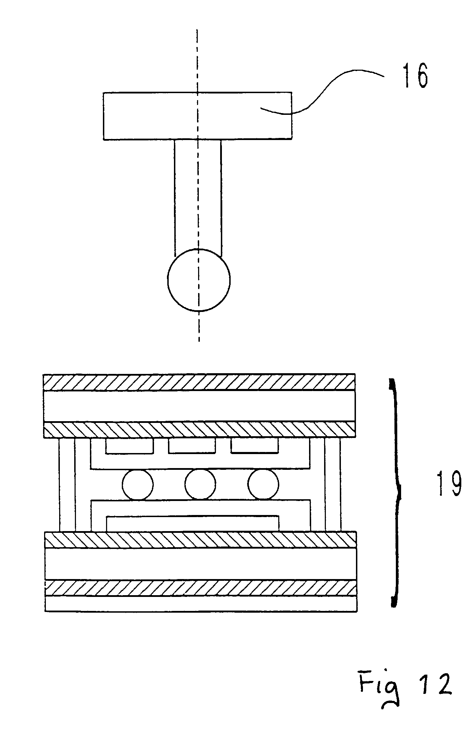

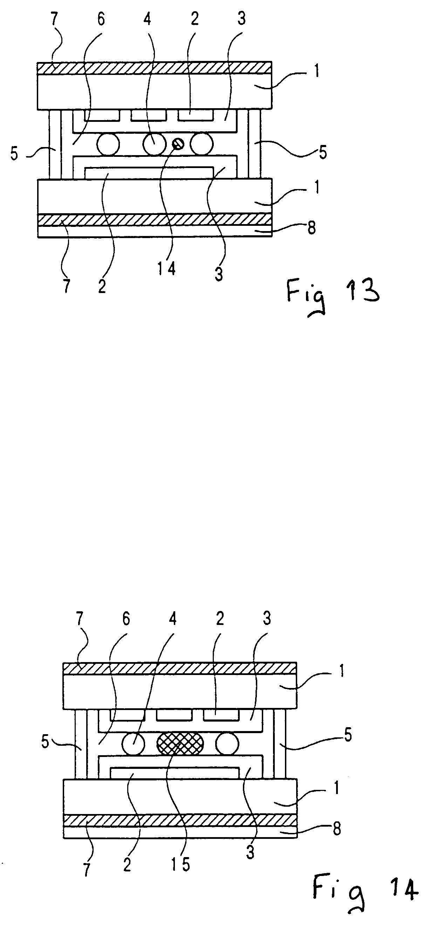

Tests were conducted using a tool 16 as shown in Fig. 12. The tool comprises a hard ball with a diameter of approximately 1cm and used to apply pressure of 2kgs for 3 seconds. Initially, both the liquid crystal display element according to the first embodiment and the comparison element were allowed to stand at normal pressure and temperature. Then the pressure test was applied as above so as to form a nucleus 14 of a bubble as shown in Fig. 13. The bubble had a diameter of approximately 30 µm. Both elements were then tested to measure the amount of time required for the nucleus 14 to disappear.

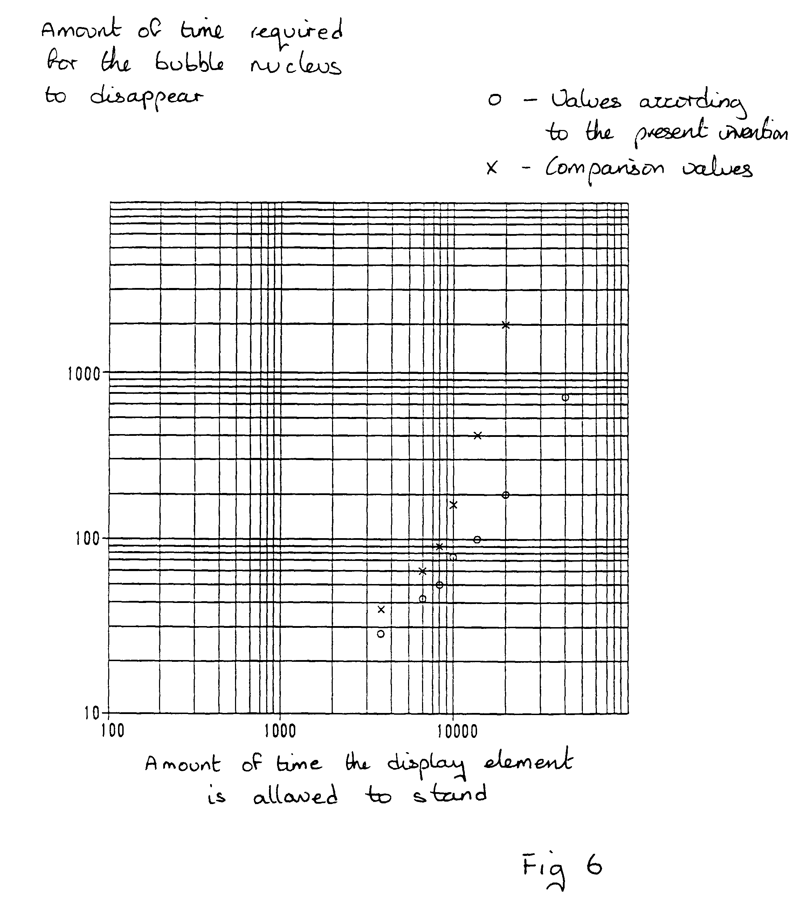

The results of the test are shown in Fig. 6. This is a graph giving the amount of time required for the nucleus to disappear plotted against the amount of time the display element is allowed to stand. In each case, if the element stands for greater length of time, then it takes a greater amount of time for the bubble nucleus to disappear. Fig. 6 shows the result of preparing 5 elements according to the first embodiment and five comparison elements. After 3000 hours have passed, a nucleus of a bubble is made in each of the ten elements. The amount of time required for the nucleus to disappear under normal pressure and temperature conditions is then measured. Each element is then left for 6000 hours. After 6000 hours, another nucleus of a bubble is made and again the amount of time required for the nucleus to disappear under normal pressure and temperature conditions is again monitored. This is repeated for all of the elements until 40,000 hours from the beginning of the test have passed. This results in a nucleus being made a total of six times in each element.

The values given for the liquid crystal display element of the first embodiment and a comparison element in Fig. 6 is thus the average of the five elements. Thus for example, the average of five elements being allowed to stand for 10,000 hours results in the bubble nucleus to disappear after just under 200 hours in the comparison product and in the present invention after 60 hours. After 20,000 hours, the bubble nucleus in the comparison element did not disappear but instead formed into another bubble 15 as shown in Fig. 14. Hence the bubble did not disappear. In contrast, the liquid crystal display element of the first embodiment enabled the bubble nucleus to disappear even being allowed to stand for 40,000 hours.

Other embodiments of the present invention will now be described but it should be noted that the embodiments are not exclusionary and the features of one embodiment maybe applied with features from one or more of the other embodiments.

### Embodiment No. 2

An element as described above in Embodiment No. 1 is shown in Fig. 2 with the modification that the polarising plates 7 and reflecting plate 8 were fixed to the substrates 1 prior to the epoxy adhesive been applied to both ends of the substrate and hence contacts the ends of the plates.

### Embodiment No. 3

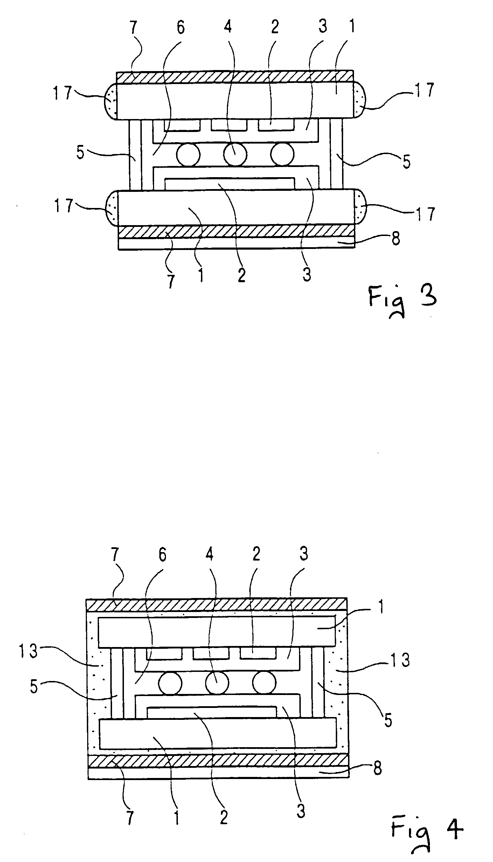

An element as described in Embodiment No. 1 is shown in Fig. 3 with the modification that the end portions were cut by a laser or a hot knife typically at a temperature of 250°C to seal the edges and adjacent substrates were then welded together to form a welding film 17.

### Embodiment No. 4

As shown in Fig. 4, a liquid crystal display element similar to that described in Embodiment No. 1 forms this fourth embodiment. However, in this embodiment, the liquid crystal cell was totally immersed in the epoxy adhesive to form a film on the entire liquid crystal cell and then the polarising plates 7 were affixed thereto.

### Embodiment No. 5

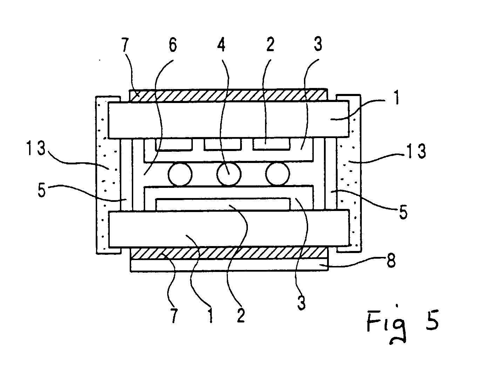

An element similar to Embodiment No. 1 is shown in Fig. 5. In this fifth embodiment, the ends of the substrates are immersed in the epoxy adhesive and the adhesive does not extend to the polarising plates 7.

### Embodiment No. 6

In the sixth embodiment, the substrate 1 is constructed as shown in Fig. 11. In this embodiment, a polarising element film 12 is disposed between two polycarbonate films 9, the EVA films 10 and the phenoxy resin films 11. In this embodiment the substrate serves as a polariser and hence polarising plates 7 are not required. The epoxy resin maybe applied in any manner as shown in Fig. 2 to 5.

When the aforementioned pressure test was applied to a liquid crystal display element according to the second to sixth embodiments, the same advantages were obtained as those according to the first embodiment.

### Embodiment No. 7

The seventh embodiment is as described in the first embodiment but with a liquid crystal having an oxygen saturation solubility of not less than 10 µl/ml, and preferably not less than 50 µl/ml. The element was then allowed to stand for 200 days (i.e. 4800 hours). The pressure test as discussed above was then applied. In this case, no bubbles formed or small bubbles formed but disappeared quickly. Hereinafter, this is referred to as no abnormalities. However, if the liquid crystal had an oxygen saturation solubility of less than 10 µl/ml, then a bubble 15 as shown in Fig. 14 was observed.

### Embodiment No. 8

Again, a liquid crystal display element as described in the first embodiment was manufactured having a liquid crystal medium with a nitrogen saturation solubility of not less than 10 µl/ml and preferably not less than 50 µl/ml. The element was again allowed to stand for 200 days or 4800 hours. When the same pressure test was performed, it was observed that no abnormalities occurred. However, if the saturation solubility of nitrogen was less than 10 µl/ml, then a bubble formed in the display element.

### Embodiment No. 9

A liquid crystal display element as described in the first embodiment again produced with a liquid crystal having a saturation solubility of water vapour of not less than 100 ppm and preferably not less than 300 ppm. The element was then allowed to stand for 200 days or 4800 hours. When the same pressure test was applied, it was observed that no abnormalities occurred in the element. However, if the saturation solubility of water vapour was less than 100 ppm, then a bubble formed in the liquid crystal display element.

### Embodiment No. 10

An element as described in the first embodiment forms the subject of the tenth embodiment but controlling the degree to which either oxygen, nitrogen or water vapour or a mixture thereof was saturated in the liquid crystal immediately after the production of the liquid crystal display element. The degree was controlled to not more than 0.9 and preferably not more than 0.5. The degree is obtained as follows:$\frac{\text{solubility}}{{\text{saturation solubility (O}}_{\text{2}} \text{)}} \text{+} \frac{\text{solubility}}{{\text{saturation solubility (N}}_{\text{2}} \text{)}} \text{+} \frac{\text{solubility}}{{\text{saturation solubility (H}}_{\text{2}} \text{O)}} \text{≦ 0.9}$ The element was then allowed to stand for 200 days or 4800 hours. When applying the same test as applied above, no abnormalities occurred in the display element. If, however, the liquid crystal medium was saturated to more than one, bubbles formed in the liquid crystal display elements.

### Embodiment No. 11

Three elements as described in the first embodiment were produced but with a different number of spacers sprayed onto the substrate. In each case, the elements were allowed to stand for 200 days or 4800 hours. Each element was then subjected to the pressure test as described above. The different number of spacers was as follows: the first used 60 spacers per mm², the second used 150 spacers per mm² and the third used 300 spacers per mm². In the second and third element, no abnormalities occurred in the elements. However, the first having only 60 spacers per mm² formed a bubble such as shown in Fig. 14.

As a comparison, the same tests were conducted on the same elements as above but without the coating layer 11. In each case, irrespective of the number of spacers, bubbles as shown in Fig. 14 were formed.

### Embodiment No. 12

A liquid crystal display element as described in the first embodiment was allowed to stand for 200 days or 4800 hours at normal pressure and temperature conditions. The element was then allowed to stand for 24 hours in a vacuum dryer under a reduced pressure of 50 torrs. When the pressure test as described above was applied, no abnormalities occurred in the element. However, if the same element was only allowed to stand for 200 days at normal pressure and temperature conditions and was not allowed to stand at the reduced pressure, this resulted in a bubble being formed as shown in Fig. 14.

### Embodiment No. 13

A liquid crystal display element as described in the first embodiment was mounted on a piece of electronic equipment and used for more than 200 days or 4800 hours. An impact of some kind was then applied to the element thereby forming a bubble. The element was then pressurised to less than 3kg/cm² in a pressurising tank for 50 hours so as to cause the bubble to disappear. The element then stood for 24 hours in a vacuum dryer under a reduced pressure of 50 torrs. When the pressure test was applied, no abnormalities occurred.

### Embodiment No. 14.

An element as described in the first embodiment was placed in a vacuum dryer under a reduced pressure of 50 torrs immediately after it had been produced. The element was allowed to stand in this condition for 200 days or 4800 hours. In comparison, another element was allowed to stand for 200 days at normal pressure. When the pressure test was applied as described above, no abnormalities occurred in the element stored at the reduced pressure but bubbles as shown in Fig. 14 were formed in the element stored only at the normal pressure.

### Embodiment No. 15

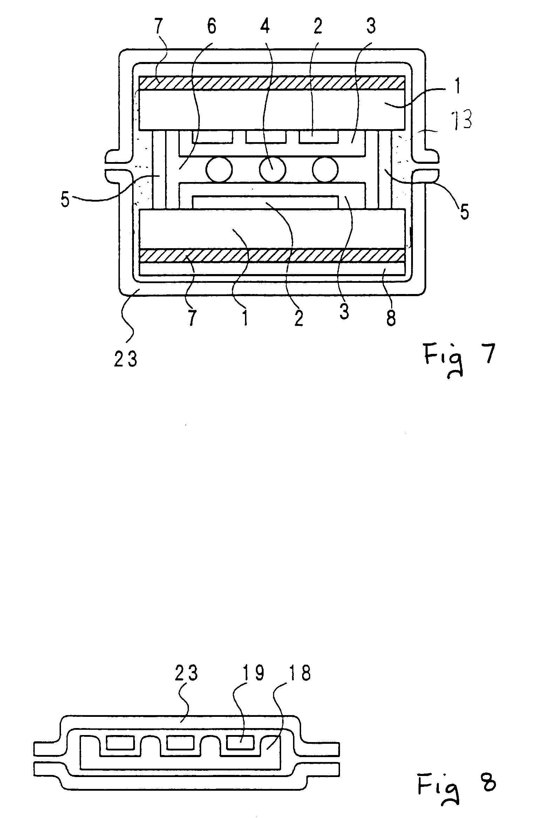

As shown in Fig. 7, an element as described in the first embodiment was vacuum packed using a film 23 which also provided a gas barrier. The same advantages of those attained in the first embodiment were also obtained.

### Embodiment No. 16

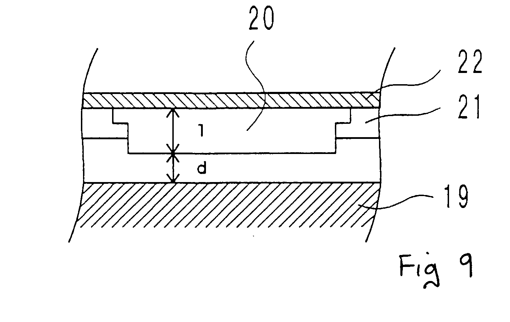

Fig. 8 illustrates a number of elements 19 being arranged side by side on a tray 18 and vacuum packed by a film 23 having gas barrier characteristics. The same advantages as those attained in first embodiment were also obtained.

### Embodiment No. 17

A liquid crystal display element as described in Embodiment No. 1 was mounted on a piece of electronic equipment, such as a desktop computer, as shown in Fig. 9. The element 19 was disposed behind a transparent guard plate 20 which was clamped by an external frame 21. A decorative plate 22 was disposed thereover.

The thickness 1 of the guard plate and the space d between liquid crystal display element 19 and the guard plate 20 were varied. A pressure test such as the one described above was applied to the electronic equipment in a direction perpendicular to the guard plate 20. The results of the pressure tests are as shown in table 1.

**Table 1**

| Space d (mm) | Thickness 1 of guard plate (mm) | | | | |
|---|---|---|---|---|---|
| | 0.2 | 0.3 | 0.5 | 0.7 | 1.0 |
| 0.0 | Bubble formation | Bubble formation | Unchanged | Unchanged | Unchanged |
| 0.2 | Bubble formation | Bubble formation | Unchanged | Unchanged | Unchanged |
| 0.5 | Unchanged | Unchanged | Unchanged | Unchanged | Unchanged |
| 0.8 | Unchanged | Unchanged | Unchanged | Unchanged | Unchanged |

In the above table, bubble formation indicates a bubble being formed in the element as shown in Fig. 14. As is apparent from table 1, the optimum thickness of the guard plate was not less than 0.5 mm. The optimum space between the guard plate and liquid crystal display element was not less than 0.5 mm.

The element may be mounted on other pieces of electronic equipment such as pocket beepers, electronic pocket notebooks, measuring instruments, telephone handsets, facsimile machines, IC cards or personal computers.

As has been described above, the liquid crystal display element is described as having a pair of flexible substrates. The end portions of the substrates are treated so that the permeation of gas or water vapour into the liquid crystal is reduced. The end portions may be submerged in epoxy resin or subjected to heat.

The amount of time taken for gas or water vapour to be saturated in the liquid crystal resulting in the element being likely to produce bubbles has been increased by the present invention. The increase is achieved by using a liquid crystal which has an oxygen saturation solubility of not less than 10 µl/ml, a nitrogen saturation solubility of not less than 10 µl/ml or a saturation solubility of water vapour of not less than 100 ppm. Furthermore, if the oxygen, nitrogen or water vapour or a mixture thereof is saturated in the liquid crystal immediately after the production of the element is controlled to less than 0.9, then the same can be achieved.

The number of spacers provided in the element vary in the range from 150 to 300 per mm². A coating layer having a pencil hardness of not less than H is formed on the inner surfaces of the substrate next to the orientation film. This further reduces the formation of bubbles caused by an external force.

When manufacturing the element, if it is allowed to stand at a reduced pressure, then the amount of gas or water vapour that can permeate into the liquid crystal is decreased. Consequently, if the element is stored at a reduced pressure, then this decreases the permeation of gas or water vapour.

When such an element is mounted on a piece of electronic equipment, if the guard plate disposed over the liquid crystal display element has a thickness of 0.5 mm or more and the distance between the guard plate and the element is at least 0.5 mm or more, then the likelihood of bubbles forming can be diminished.

Hence, the present invention is able to provide a highly reliable liquid crystal display element which obviates poor display performance caused by bubbles through the elimination of bubble formation.

The aforegoing description of the embodiments of the present invention have been given by way of example only and it will be appreciated by a person skilled in the art that modifications may be made without departing from the scope of the present invention.

### APPENDIX A

Pencil hardness is an indication of the scratch resistance of the hard coat film when the film is scratched by pencils having different densities. The scratch test method and criterion for judgement are prescribed by Japanese Industrial Standard (JIS) K-5400 item 6.14 published in 1988. As the value of the scratch resistance, the density symbol of the pencil having the next highest density to the one having scratched the hard coat film is used.

The following is the classification of pencil densities prescribed by Japanese Industrial Standard (JIS) S-6005 published in 1992.
9H, 8H, 7H, 6H, 5H, 4H, 3H, 2H, H, F, HB, B, 2B, 3B, 4B, 5B, 6B

The above classification is based on the density only because the hardness is difficult to measure, and expresses numerically. However, the classification shows the hardness of pencil as well because the density and the hardness correlate with each other.

The following table shows the bending strength equivalent to each density mentioned above. (According to JIS 6005 published in 1992).

| Density symbols | Bending stress (MPa) |
|---|---|
| 9H - 7H | 78.5 or more |
| 6H and 5H | 68.6 or more |
| 4H - H | 58.5 or more |
| F and HB | 49.0 or more |
| B | 39.2 or more |
| 2B and 3B | 29.4 or more |
| 4B | 24.5 or more |
| 5B and 6B | 19.6 or more |

Hence, the coating layer having a pencil hardness of not less than H can be defined as a surface hardness greater than or equal to a pencil having a bending stress of 50MPa.

## Claims

1. A method of producing a liquid crystal display element (19) comprising the steps of forming an orientating film (3) on each of a pair of flexible substrates (1); forming an electrode layer (2) on one of the substrates on the same side as the respective orientating film, arranging a plurality of spacers (4) between the two substrates to define predetermined space therebetween; sealing the flexible substrates to each other by sealing members (5); sealing liquid crystal material (6) in the space and providing a gas barrier around the liquid crystal material, characterised by placing the substrates and sealed in liquid crystal material under reduced pressure.

2. A method as claimed in claim 1, characterised in that the reduced pressure is about 50 Torr.

3. A method as claimed in claim 1 or 2, characterised in that the liquid crystal display element (19) is stored in a vacuum dryer under reduced pressure until use.

4. A method as claimed in claim 1 or 2, characterised in that the liquid crystal display element (19) is placed in a vacuum dryer under reduced pressure for at least twenty four hours.

5. A method as claimed in any preceding claim, characterised in that the gas barrier is provided by including a gas barrier layer (10) on each substrate.

6. A method as claimed in any preceding claim, characterised in that the gas barrier is provided by performing a gas barrier treatment on the substrates by sealing edges of the substrates.

7. A method as claimed in claim 6, characterised in that the edges of the substrates are sealed with a material impermeable to gas and water vapour.

8. A method as claimed in claim 7, characterised in that the material is selected from epoxy system adhesive, ethylene-vinyl acetate copolymer and polyvinyl alcohol.

9. A method as claimed in any preceding claim, characterised in that polarising plates (7) are affixed to the outer surfaces of the substrates.

10. A method as claimed in claim 9, as appendant to claim 6, 7 or 8, characterised in that polarising plates are affixed to the outer surfaces of the substrates prior to the gas barrier treatment, so that the treatment also seals the edges of the polarising plates.

11. A method as claimed in claim 6, or any claim appendant to claim 6, characterised in that the barrier treatment includes applying an epoxy system adhesive (13) to the edges of the substrates and hardening the adhesive.

12. A method as claimed in claim 6, or any claim appendant to claim 6, wherein the gas barrier treatment includes sealing the edges of the substrates using heat.

13. A method as claimed in claim 11, as appendant to claim 8, characterised in that the gas barrier treatment includes immersing the liquid crystal display element in epoxy system adhesive, thereby forming a film of epoxy system adhesive on the element, and using the epoxy system adhesive film to affix the polarising plates.

14. A method as claimed in claim 9, when appendent to claim 5, characterised in that a hard coat layer (11) having a hardness of a pencil capable of withstanding a bending stress of at least 50 MPa is applied to the gas barrier layer on each substrate.

15. A method as claimed in claim 14, wherein the hard coat layer is of phenoxy resin.

16. A method as claimed in any preceding claim, characterised in that the gas barrier is provided by a film (23) surrounding the substrates.

17. A method as claimed in claim 16, wherein the substrates are vacuum packed within the film.

18. A method as claimed in any preceding claim, characterised in that the liquid crystal material has an oxygen saturation solubility of at least 10 microlitres per millilitre, and preferably at least 50 microlitres per millilitre.

19. A method as claimed in any preceding claim, characterised in that the liquid crystal material has a nitrogen saturation solubility of at least 10 microlitres per millilitre, and preferably at least 50 microlitres per millilitre.

20. A method as claimed in any preceding claim, characterised in that the liquid crystal material has a saturation solubility of water vapour of at least 100 ppm, and preferably at least 300 ppm.

21. A method as claimed in any preceding claim, characterised in that the degree to which either oxygen, nitrogen, water vapour or a mixture thereof is saturated in the liquid crystal material immediately after production of the liquid crystal display element is not more than 0.9, and preferably not more than 0.5.

22. A method as claimed in any preceding claim, characterised in that between 150 and 300 spacers per square millimetre are placed between the substrates.

## Patentansprüche

1. Verfahren zum Herstellen eines Flüssigkristall-Anzeigeelements (19) umfassend die Schritte:
Bilden eines Ausrichtungsfilms (3) auf jedem von einem Paar flexibler Substrate (1);
Bilden einer Elektrodenschicht (2) auf einem der Substrate auf der gleichen Seite wie der jeweilige Ausrichtungsfilm,
Anordnen einer Mehrzahl von Abstandselementen (4) zwischen den beiden Substraten, um zwischen diesen einen vorbestimmten Zwischenraum zu definieren;
Abdichten der flexiblen Substrate aneinander durch Abdichtungselemente (5);
Einschließen von Flüssigkristallmaterial (6) in dem Zwischenraum und Vorsehen einer Gasbarriere um das Flüssigkristallmaterial,
**gekennzeichnet durch** Anordnen der Substrate und des eingeschlossenen Flüssigkristallmaterials unter reduziertem Druck.

2. Verfahren nach Anspruch 1, dadurch gekennzeichnet, daß der reduzierte Druck ungefähr 50 Torr beträgt.

3. Verfahren nach Anspruch 1 oder 2, dadurch gekennzeichnet, daß das Flüssigkristall-Anzeigeelement (19) bis zu Verwendung in einem Vakuumtrockner unter reduziertem Druck gelagert wird.

4. Verfahren nach Anspruch 1 oder 2, dadurch gekennzeichnet, daß das Flüssigkristall-Anzeigeelement (19) für wenigstens 24 Stunden in einem Vakuumtrockner unter reduziertem Druck angeordnet wird.

5. Verfahren nach einem der vorangehenden Ansprüche, dadurch gekennzeichnet, daß die Gasbarriere bereitgestellt wird durch Beifügen einer Gasbarriereschicht (10) auf jedem Substrat.

6. Verfahren nach einem der vorangehenden Ansprüche, dadurch gekennzeichnet, daß die Gasbarriere bereitgestellt wird durch Durchführen einer Gasbarrierenbehandlung auf den Substraten durch Abdichten von Rändern der Substrate.

7. Verfahren nach Anspruch 6, dadurch gekennzeichnet, daß die Ränder der Substrate mit einem für Gas und Wasserdampf undurchlässigen Material abgedichtet werden.

8. Verfahren nach Anspruch 7, dadurch gekennzeichnet, daß das Material aus Epoxydsystemhaftmittel, Ethylen-Vinylacetat-Copolymer und Polyvinyl-Alkohol gewählt ist.

9. Verfahren nach einem der vorangehenden Ansprüche, dadurch gekennzeichnet, daß Polarisatorplatten (7) an den äußeren Oberflächen der Substrate befestigt werden.

10. Verfahren nach Anspruch 9, mit Rückbeziehung auf Anspruch 6, 7 oder 8, dadurch gekennzeichnet, daß die Polarisatorplatten vor der Gasbarrierenbehandlung an den äußeren Oberflächen der Substrate befestigt werden, so daß die Behandlung auch die Ränder der Polarisatorplatten abdichtet.

11. Verfahren nach Anspruch 6 oder einem auf Anspruch 6 rückbezogenen Anspruch, dadurch gekennzeichnet, daß die Barrierenbehandlung das Anbringen eines Epoxysystemhaftmittels (13) an den Rändern der Substrate und das Härten des Haftmittels umfaßt.

12. Verfahren nach Anspruch 6 oder einem von Anspruch 6 abhängigen Anspruch, bei dem die Gasbarrierenbehandlung das Abdichten der Ränder der Substrate unter Verwendung von Wärme umfaßt.

13. Verfahren nach Anspruch 11 mit Rückbeziehung auf Anspruch 8, dadurch gekennzeichnet, daß die Gasbarrierenbehandlung das Eintauchen des Flüssigkristall-Anzeigeelements in ein Epoxysystemhaftmittel umfaßt, wodurch ein Film aus Epoxysystemhaftmittel auf dem Element gebildet wird und der Epoxysystemhaftmittelfilm zum Befestigen der Polarisatorplatten verwendet wird.

14. Verfahren nach Anspruch 9, wenn dieser von Anspruch 5 abhängt, dadurch gekennzeichnet, daß eine Hartbeschichtungsschicht (11) auf der Gasbarriereschicht auf jedem Substrat angebracht wird, die eine Stifthärte fähig zum Widerstehen einer Biegespannung von wenigstens 50 MPa aufweist.

15. Verfahren nach Anspruch 14, bei dem die Hartbeschichtungsschicht aus Phenoxyharz gebildet wird.

16. Verfahren nach einem der vorangehenden Ansprüche, dadurch gekennzeichnet, daß die Gasbarriere durch einen die Substrate umgebenden Film (23) bereitgestellt wird.

17. Verfahren nach Anspruch 16, bei dem die Substrate innerhalb des Films vakuumabgedichtet wird.

18. Verfahren nach einem der vorangehenden Ansprüche, dadurch gekennzeichnet, daß das Flüssigkristallmaterial eine Sauerstoffsättigungslöslichkeit von wenigstens 10 µl pro ml, bevorzugt wenigstens 50 µl pro ml, aufweist.

19. Verfahren nach einem der vorangehenden Ansprüche, dadurch gekennzeichnet, daß das Flüssigkristallmaterial eine Stickstoffsättigungslöslichkeit von wenigstens 10 µl pro ml, bevorzugt wenigstens 50 µl pro ml, aufweist.

20. Verfahren nach einem der vorangehenden Ansprüche, dadurch gekennzeichnet, daß das Flüssigkristallmaterial eine Wasserdampfsättigungslöslichkeit von wenigstens 100 ppm, bevorzugt wenigstens 300 ppm, aufweist.

21. Verfahren nach einem der vorangehenden Ansprüche, dadurch gekennzeichnet, daß der Grad, mit dem Sauerstoff, Stickstoff, Wasserdampf oder einer Mischung davon im Flüssigkristallmaterial gesättigt ist, unmittelbar nach der Herstellung des Flüssigkristall-Anzeigeelements nicht mehr als 0,9, bevorzugt nicht mehr als 0,5 beträgt.

22. Verfahren nach einem der vorangehenden Ansprüche, dadurch gekennzeichnet, daß zwischen 150 und 300 Abstandselemente pro mm² zwischen den Substraten angeordnet werden.

## Revendications

1. Procédé de fabrication d'un élément d'affichage à cristal liquide (19) comprenant les étapes consistant à former un film d'orientation (3) sur chacun de deux substrats flexibles (1) ; former une couche d'électrode (2) sur un des substrats du même côté que le film d'orientation respectif, en disposant une pluralité de pièces d'écartement (4) entre les deux substrats afin de définir entre eux un espace prédéterminé ; sceller les substrats flexibles l'un à l'autre à l'aide d'éléments de scellement (5) ; sceller du matériau en cristal liquide (6) dans l'espace et prévoir une barrière imperméable aux gaz autour du matériau en cristal liquide, caractérisé par le fait de placer les substrats et le matériau en cristal liquide scellé à l'intérieur sous une pression réduite.

2. Procédé selon la revendication 1, caractérisé en ce que la pression réduite est d'environ 50 Torr.

3. Procédé selon la revendication 1 ou 2, caractérisé en ce que l'élément d'affichage à cristal liquide (19) est stocké dans un séchoir sous vide sous pression réduite jusqu'à utilisation.

4. Procédé selon la revendication 1 ou 2, caractérisé en ce que l'élément d'affichage à cristal liquide (19) est placé dans un séchoir sous vide sous pression réduite pendant au moins vingt-quatre heures.

5. Procédé selon l'une quelconque des revendications précédentes, caractérisé en ce que la barrière imperméable aux gaz est prévue en incluant une couche barrière imperméable aux gaz (10) sur chaque substrat.

6. Procédé selon l'une quelconque des revendications précédentes, caractérisé en ce que la barrière imperméable aux gaz est formée en mettant en oeuvre un traitement d'arrêt des gaz sur les substrats en scellant les bords des substrats.

7. Procédé selon la revendication 6, caractérisé en ce que les bords des substrats sont scellés avec un matériau imperméable au gaz et à la vapeur d'eau.

8. Procédé selon la revendication 7, caractérisé en ce que le matériau est choisi parmi un système adhésif époxy, un copolymère éthylène-acétate de vinyle et l'alcool polyvinylique.

9. Procédé selon l'une quelconque des revendications précédentes, caractérisé en ce que des plaques polarisantes (7) sont fixées aux surfaces extérieures des substrats.

10. Procédé selon la revendication 9, lorsqu'elle se rattache à la revendication 6, 7 ou 8, caractérisé en ce que les plaques polarisantes sont fixées aux surfaces extérieures des substrats avant le traitement d'arrêt des gaz, de sorte que le traitement scelle également les bords des plaques polarisantes.

11. Procédé selon la revendication 6, ou selon l'une quelconque des revendications dépendant de la revendication 6, caractérisé en ce que le traitement d'arrêt des gaz comprend l'application d'un système adhésif époxy (13) aux bords des substrats et le durcissement de l'adhésif.

12. Procédé selon la revendication 6, ou selon l'une quelconque des revendications dépendant de la revendication 6, dans lequel le traitement d'arrêt des gaz comprend le fait de sceller les bords des substrats en utilisant la chaleur.

13. Procédé selon la revendication 11, lorsqu'elle se rattache à la revendication 8, caractérisé en ce que le traitement d'arrêt des gaz comprend l'immersion de l'élément d'affichage à cristal liquide dans un système adhésif époxy, de manière à former un film en système adhésif époxy sur l'élément, et l'utilisation du film en système adhésif époxy pour fixer les plaques polarisantes.

14. Procédé selon la revendication 9, lorsqu'elle se rattache à la revendication 5, caractérisé en ce qu'une couche de revêtement dur (11), ayant une dureté au stylo capable de supporter une contrainte de flexion d'au moins 50 MPa, est appliquée sur la couche barrière imperméable aux gaz sur chaque substrat.

15. Procédé selon la revendication 14, dans lequel la couche de revêtement dur est en résine phénoxy.

16. Procédé selon l'une quelconque des revendications précédentes, caractérisé en ce que la barrière imperméable aux gaz est assurée par un film (23) entourant les substrats.

17. Procédé selon la revendication 16, dans lequel le film est appliqué sur les substrats par emballage sous vide.

18. Procédé selon l'une quelconque des revendications précédentes, caractérisé en ce que le matériau en cristal liquide a une solubilité de saturation de l'oxygène d'au moins 10 microlitres par millilitre, et de préférence d'au moins 50 microlitres par millilitre.

19. Procédé selon l'une quelconque des revendications précédentes, caractérisé en ce que le matériau en cristal liquide a une solubilité de saturation de l'azote d'au moins 10 microlitres par millilitre, et de préférence d'au moins 50 microlitres par millilitre.

20. Procédé selon l'une quelconque des revendications précédentes, caractérisé en ce que le matériau en cristal liquide a une solubilité de saturation de la vapeur d'eau d'au moins 100 ppm, et de préférence d'au moins 300 ppm.

21. Procédé selon l'une quelconque des revendications précédentes, caractérisé en ce que le degré de saturation en oxygène, azote, vapeur d'eau ou un mélange de ceux-ci dans le matériau en cristal liquide immédiatement après fabrication de l'élément d'affichage à cristal liquide ne dépasse pas 0,9, et de préférence ne dépasse pas 0,5.

22. Procédé selon l'une quelconque des revendications précédentes, caractérisé en ce qu'entre 150 à 300 pièces d'écartement par millimètre carré sont placées entre les substrats.
